# EUROPÄISCHE PATENTSCHRIFT

(11) **EP 2 668 436 B1**
(45) Veröffentlichungstag und Bekanntmachung des Hinweises auf die Patenterteilung: **08.04.2015**
(21) Anmeldenummer: 12706470.7
(22) Anmeldetag: 24.02.2012
(51) Int. Cl.: F16M 11/04

(54) **SCHNELLSPANNVORRICHTUNG**
QUICK CLAMPING DEVICE
DISPOSITIF DE SERRAGE RAPIDE

(30) Priorität: 10.03.2011 DE 102011013552
(43) Veröffentlichungstag der Anmeldung: 04.12.2013
(73) Patentinhaber: CULLMANN GERMANY GmbH, 90579 Langenzenn (DE)
(72) Erfinder: CULLMANN, Wolfgang, 90579 Langenzenn (DE)
(74) Vertreter: Louis Pöhlau Lohrentz
(86) Internationale Anmeldenummer: PCT/EP2012/000792
(87) Internationale Veröffentlichungsnummer: WO 2012/119709

(56) Entgegenhaltungen:
- EP-A1- 0 982 613
- WO-A1-2008/028351
- DE-A1- 3 429 925
- GB-A- 190 522 961
- JP-A- 11 255 521
- US-A- 5 385 325
- US-A1- 2007 097 619

## Beschreibung

Die Erfindung betrifft eine Schnellspannvorrichtung zum Aufspannen eines fototechnischen oder filmtechnischen Geräts mit einer Klemmplatteneinrichtung mit einer daran feststellbaren Halterungsplatte für das Gerät.

Zur raschen Befestigung von optischen Geräten, insbesondere von fototechnischen oder filmtechnischen Geräten auf einem Stativ oder dergleichen sind Schnellspannvorrichtungen bekannt zum Beispiel WO 2008/028351. Das optische Gerät ist auf einer Halterungsplatte befestigt, die auf einer Klemmplatte der Schnellspannvorrichtung fixierbar ist. Die Klemmplatte ist als eine prismenförmige Kulissenführung mit seitlichen Wänden ausgebildet, wobei die eine Kulisse als feste Klemmbacke und die andere Kulisse als bewegliche Klemmbacke ausgebildet ist. Das bedeutet, dass nur eine vorbestimmte Halterungsplatte einsetzbar ist, deren Breite auf die Anordnung der festen Backe so abgestimmt ist, dass die optische Achse des optischen Gerätes nach dem Aufspannen mit der Drehachse der Schnellspannvorrichtung fluchtet. Eine derartige fluchtende Anordnung ist erforderlich, wenn das optische Gerät um seine optische Achse gedreht werden soll, beispielsweise zur Anfertigung von Panoramaansichten, die keine optische Verzerrung aufweisen.

Die US 2003 / 0 218 809 A1 beschreibt einen Objektivtubuskörper mit einer Stativbefestigung, wobei der Objektivtubuskörper eine erste ringförmige Stativbefestigungseinheit aufweist mit einem Schwalbenschwanz, der in der Stativbefestigung klemmbar ist. Der Schwalbenschwanz ist durch eine U-förmige Klemmeinrichtung mit beweglichen Klemmbacken in der Stativbefestigung klemmbar. Die Klemmeinrichtung wird durch eine Klemmschraube elastisch so verformt, dass die Klemmbacken aufeinander zu bewegt werden. Es ist jedoch nicht gewährleistet, dass die optische Achse des an den Objektivtubus angesetzten optischen Gerätes nach dem Aufspannen mit der Drehachse der Schnellspannvorrichtung fluchtet

Die DE 20 2004 003 173 U1 beschreibt eine Visierlinienerhöhung für ein Sportgewehr. Bei dem optischen Gerät handelt es sich um ein Diopter oder einen Korntunnel, der auf eine gewehrseitige Schwalbenschwanzführung einstellbarer Breite aufschiebbar ist. Die Visierlinienerhöhung weist zwei Klemmbacken auf, deren Abstand zueinander einstellbar ist, wodurch die Schwalbenschwanzführung einstellbarer Breite ausgebildet wird. Die Visierlinienerhöhung ist maßlich so dimensioniert, dass die Schwalbenschwanzführung nach der Klemmung das gleiche Abstandsmaß wie die ursprüngliche Schwalbenschwanzführung des Sportgewehrs aufweist.

Aufgabe der vorliegenden Erfindung ist es, eine Schnellspannvorrichtung zu schaffen, die den oben genannten Nachteil nicht aufweist.

Erfindungsgemäß wird diese Aufgabe mit einer Schnellspannvorrichtung nach Anspruch 1 gelöst. Es ist eine Schnellspannvorrichtung für ein fototechnisches oder filmtechnisches Gerät vorgesehen, mit einer Klemmplatteneinrichtung mit einer daran feststellbaren Halterungsplatte für das Gerät, wobei die Klemmplatteneinrichtung eine prismenförmige Kulissenführung mit als Klemmbacken ausgebildeten seitlichen Wänden aufweist, wobei die Klemmbacken mit einem Getriebe derart bewegungsverbunden sind, dass die Klemmbacken simultan gegensinnig bewegbar sind, wobei die Klemmbacken zu einem Referenzpunkt gleichen Abstand aufweisen,
wobei vorgesehen ist,
a) dass die Klemmbacken mit einem Schraubgetriebe bewegungsverbunden sind, das als Antriebselement eine Gewindespindel mit einem ersten Gewindeabschnitt mit einem Rechtsgewinde und mit einem zweiten Gewindeabschnitt mit einem Linksgewinde aufweist, wobei beide Gewindeabschnitte die gleiche Steigung aufweisen, so dass die Klemmbacken durch Drehen der Gewindespindel simultan gegensinnig bewegbar sind, oder
b) dass die Gewindespindel mit ihrem ersten Gewindeabschnitt mit einem in einer ersten Klemmbacke ausgebildeten Gewindeloch mit Rechtsgewinde und mit ihrem zweiten Gewindeabschnitt mit einem in einem Rahmenkörper ausgebildeten Gewindeloch mit Linksgewinde zusammenwirkt oder umgekehrt, nämlich dass der Rahmenkörper mit einer zweiten Klemmbacke bewegungsverbunden ist.

Weiter wird die Aufgabe mit einer Schnellspanneinrichtung nach Anspruch 9 gelöst. Es wird eine Schnellspannvorrichtung für ein fototechnisches oder filmtechnisches Gerät mit einer Klemmplatteneinrichtung mit einer daran feststellbaren Halterungsplatte für das Gerät vorgeschlagen, wobei die Klemmplatteneinrichtung eine prismenförmige Kulissenführung mit als Klemmbacken ausgebildeten seitlichen Wänden aufweist, wobei die Klemmbacken simultan gegensinnig bewegbar sind und wobei die Klemmbacken zu einem Referenzpunkt gleichen Abstand aufweisen, wobei vorgesehen ist, dass die Klemmbacken durch ein Koppelglied verbunden sind, und dass das Koppelglied ein zentrales Drehlager und an gegenüberliegenden Abschnitten Führungseinrichtungen für die Klemmbacken aufweist.

Die erfindungsgemäße Schnellspannvorrichtung weist den Vorteil auf, dass auch unterschiedliche breite Halterungsplatten verwendbar sind, wobei unabhängig von der Breite der Halterungsplatte die optische Achse des optischen Gerätes nach dem Aufspannen mit der Drehachse der Schnellspannvorrichtung fluchtet.

Es kann vorgesehen sein, dass die Gewindespindel mit ihrem ersten Gewindeabschnitt mit einem in einer ersten Klemmbacke ausgebildeten Gewindeloch mit Rechtsgewinde und mit ihrem zweiten Gewindeabschnitt mit einem in einer zweiten Klemmbacke ausgebildeten Gewindeloch mit Linksgewinde zusammenwirkt.

Die Gewindeabschnitte können als zweigängige Gewinde ausgebildet sein.

Die Gewindespindel kann über einen am freien Ende angeordneten Drehgriff drehbar betätigbar sein.

Es kann vorgesehen sein, dass die Klemmbacken zwischen der Unterseite der Klemmplatteneinrichtung und der Oberseite einer Bodenplatte geführt und gegen Verdrehen um die Drehachse der Gewindespindel gesichert sind. Die Querachse der Klemmbacken ist durch die Längsachse der Gewindespindel bestimmt.

Weiter kann vorgesehen sein, dass zwischen den Klemmbacken auf dem ersten Gewindeabschnitt und auf dem zweiten Gewindeabschnitt eine Justiermutter angeordnet ist, wobei zwischen den Justiermuttern ein aus der Unterseite der Klemmplatte hervorstehendes Anschlagelement angeordnet ist, an dem die Justiermuttern mit Spiel anliegen. Mittels der Justiermuttern können Fertigungstoleranzen ausgeglichen werden und die Bewegung der Klemmplatten kann feinfühlig eingestellt werden.

Die Justiermuttern können radiale Gewindelöcher aufweisen, in die Befestigungsschrauben eindrehbar sind, so dass die Justiermuttern nach dem Justieren festgelegt sind.

Der weiter oben beschriebene Rahmenkörper kann über eine Justierschraube mit der zweiten Klemmbacke bewegungsverbunden sein.

Die Justierschraube kann einen ersten Gewindeabschnitt mit einem Rechtsgewinde und einen zweiten Gewindeabschnitt mit einem Linksgewinde aufweisen

Der erste Gewindeabschnitt der Justierschraube kann eine größere Steigung aufweisen als der zweite Gewindeabschnitt oder umgekehrt. Die Steigungsdifferenz beider Gewinde bestimmt den Verstellweg bei einer Umdrehung der Justierschraube, so dass eine sehr feinfühlige Einstellung möglich ist.

Weitere Ausbildungen sind für die dritte Ausführung der Schnellspanneinrichtung vorgesehen, bei der die Klemmbacken durch ein Koppelglied verbunden sind

Es kann vorgesehen sein, dass das Koppelglied als Drehscheibe und/oder zweiarmiger Hebel ausgebildet ist.

Bei bevorzugten Ausführungen ist vorgesehen, dass die Führungsabschnitte als Langlöcher ausgebildet sind, in die mit den Klemmbacken verbundene Mitnehmer eingreifen.

Bei bevorzugten Weiterbildungen ist vorgesehen, dass die Langlöcher Führungsabschnitte eines Z-förmigen Hebels bilden, und dass in den Führungsabschnitten jeweils ein die Klemmbacke durchgreifender Lagerstift angeordnet ist.

Weiter kann vorgesehen sein, dass zwischen den beiden Klemmbacken eine Federeinrichtung, vorzugsweise ausgebildet als zwei Zugfedern angeordnet ist. Die Federeinrichtung kann die die Klemmbacken miteinander verspannen.

An einer der Klemmbacken kann ein Übertragungselement angreifen, das mit einem Exzenterhebel zusammenwirkt.

Es kann vorgesehen sein, dass das Übertragungselement einen Gewindeabschnitt aufweist, der in ein Gewindeloch der einen der Klemmbacken eingreift.

Weiter kann vorgesehen sein, dass der Exzenterhebel einen Kulissenschlitz aufweist, in den ein mit dem Übertragungselement starr verbundener Kulissenstift eingreift.

Der Exzenterhebel kann in einer U-förmigen Gabel gelagert sein, die von dem Übertragungselement durchgriffen ist und an dem Gehäuse drehbar gelagert angeordnet ist. Durch Drehen des Exzenterhebels um die Längsachse des Übertragungselements kann die Einschraublänge des Übertragungselements in der exzenterseitigen Klemmbacke bestimmt werden, so dass die Schnellspannvorrichtung an unterschiedlich breite Halterungsplatten anpassbar ist.

Die Erfindung wird nun anhand von Ausführungsbeispielen näher erläutert. Es zeigen
- Fig. 1a: ein erstes Ausführungsbeispiel einer erfindungsgemäßen Schnellspannvorrichtung in der Seitenansicht mit aufgesetzter Halterungsplatte;
- Fig. 1b: die Schnellspannvorrichtung in Fig. 1 a mit geklemmter Halterungsplatte;
- Fig. 2: die Schnellspannvorrichtung in Fig. 1 in einer perspektivischen Schnittansicht;
- Fig. 3: die Schnellspannvorrichtung in Fig. 1 in einer perspektivischen Teildarstellung;
- Fig. 4: ein zweites Ausführungsbeispiel der Schnellspannvorrichtung in einer perspektivischen Schnittansicht;
- Fig. 5: die Schnellspannvorrichtung in Fig. 4 in der Druntersicht;
- Fig. 6: ein drittes Ausführungsbeispiel der Schnellspannvorrichtung in der Draufsicht;
- Fig. 7: eine perspektivische Schnittdarstellung der Schnellspannvorrichtung in Fig. 6 längs der Schnittlinie VII-VII;
- Fig. 8: eine perspektivische Sprengdarstellung der Schnellspannvorrichtung in Fig. 6;
- Fig. 9: eine perspektivische Schnittdarstellung der Schnellspannvorrichtung in Fig. 6 längs der Schnittlinie IX-IX;
- Fig. 10a: die Schnellspannvorrichtung in Fig. 6 mit entspannten Klemmbacken in einer Druntersicht;
- Fig. 10b: die Schnellspannvorrichtung in Fig. 10a mit durch Federkraft vorgespannten Klemmbacken;
- Fig. 10c: die Schnellspannvorrichtung in Fig. 10a mit durch Federkraft vorgespannten Klemmbacken und Klemmhebel in Lage kurz vor Klemmen;
- Fig. 10d: die Schnellspannvorrichtung in Fig. 10a mit Klemmbacken in maximaler Klemmstellung.

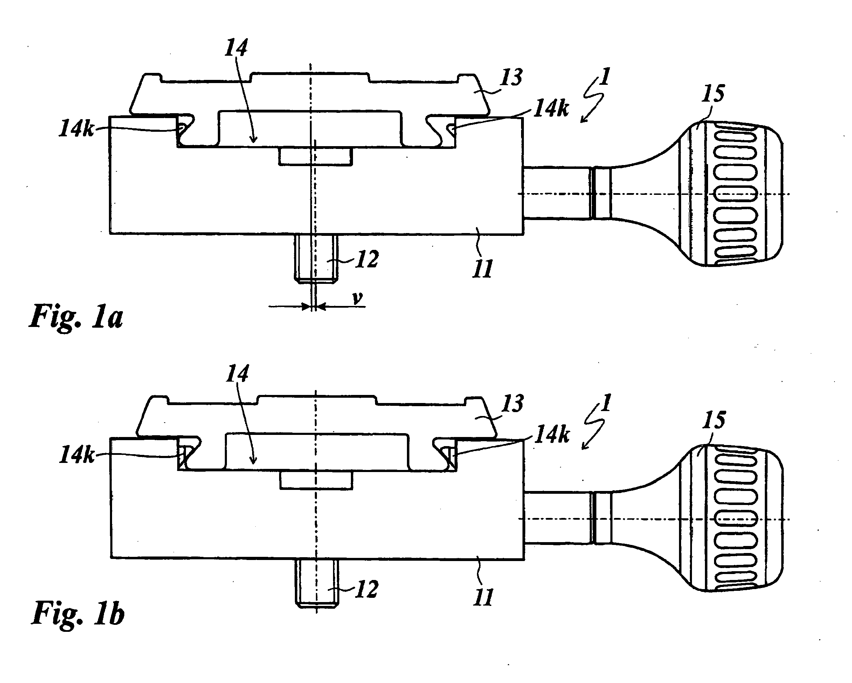

Fig. 1 zeigt eine Schnellspannvorrichtung 1 zum Befestigen eines optischen Gerätes, zum Beispiel eines Photoapparats, einer Film- oder Videokamera oder eines Fernrohrs. Die Schnellspannvorrichtung 1 weist bodenseitig eine stativseitige Schraube 12 - im folgenden Stativschraube 12 genannt - zum Fixieren der Schnellspannvorrichtung auf einem Kugelkopf, einem Stativ oder dergleichen auf. Die Mittelachse der Schnellspannvorrichtung 1 fluchtet mit der Mittelachse der Stativschraube 12 und damit mit der optischen Achse des optischen Gerätes.

Die Schnellspannvorrichtung 1 wirkt mit einer abnehmbaren Halterungsplatte 13 zusammen, die zur Aufnahme des optischen Geräts bestimmt ist und auf einem als Klemmplatteneinrichtung 14 ausgebildeten oberen Abschnitt des Gehäuses 11 der Schnellspannvorrichtung 1 fixierbar ist. Die Halterungsplatte 13 kann an dem optischen Gerät verbleiben. Zum Aufnehmen anderer optischer Geräte können weitere Halterungsplatten vorgesehen sein, die ebenfalls an den ihnen zugeordneten optischen Geräten verbleiben können.

Die Klemmplatteneinrichtung 14 weist eine Klemmplatte 14a mit einer prismenförmigen Kulissenführung mit seitlichen Wänden auf, wobei beide Kulissen als bewegliche Klemmbacken 14k ausgebildet sind, die mittels eines Schraubtriebs linear beweglich sind und Öffnungen im Gehäuse 11 durchgreifen. Der Antrieb des Schraubtriebs ist als ein manuell betätigbarer Drehgriff 15 ausgebildet. Die Kulissenführung ist in den dargestellten Ausführungsbeispielen als eine Schwalbenschwanzführung ausgebildet.

Fig. 1a zeigt die Schnellspannvorrichtung 1 mit aufgesetzter Halterungsplatte 13, wobei die Halterungsplatte 13 mit Anlage an einer der Klemmbacken 14k schräg aufgesetzt wird und dann zur Anlage mit der Klemmplatte 14a gebracht wird. Wie in Fig. 1a zu erkennen, weisen die Mittelachse der Halterungsplatte 13 und die Mittelachse der Klemmplatte 14 einen seitlichen Versatz v auf, wenn die Halterungsplatte 13 wie in Fig. 1a so eingesetzt wird, dass sie mit ihrer einen (in Fig. 1a hinteren) Fußseite an der einen (in Fig. 1 a hinteren) Klemmbacke 14k anliegt.

Beim Klemmen der Halterungsplatte 13 werden die Klemmbacken 14k durch Drehen des Drehgriffs 15 in gleichem Maße bewegt, so dass im geklemmten Zustand der Halterungsplatte 13 die Mittelachsen der Halterungsplatte 13 und der Klemmplatteneinrichtung 14 fluchten.

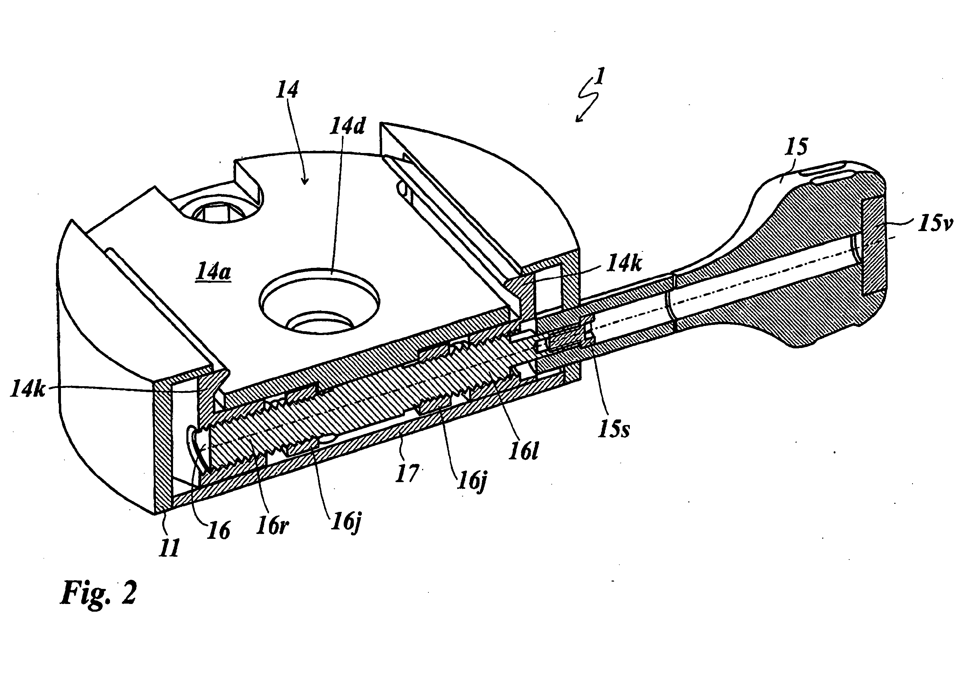

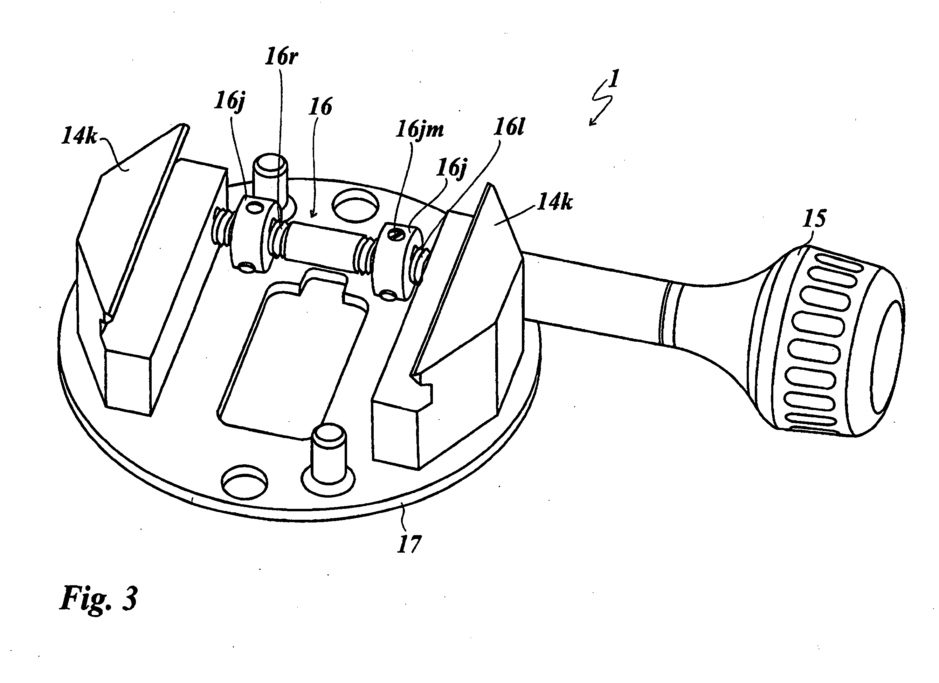

Fig. 2 und 3 zeigen den Aufbau eines ersten Ausführungsbeispiels der erfindungsgemäßen Schnellspannvorrichtung.

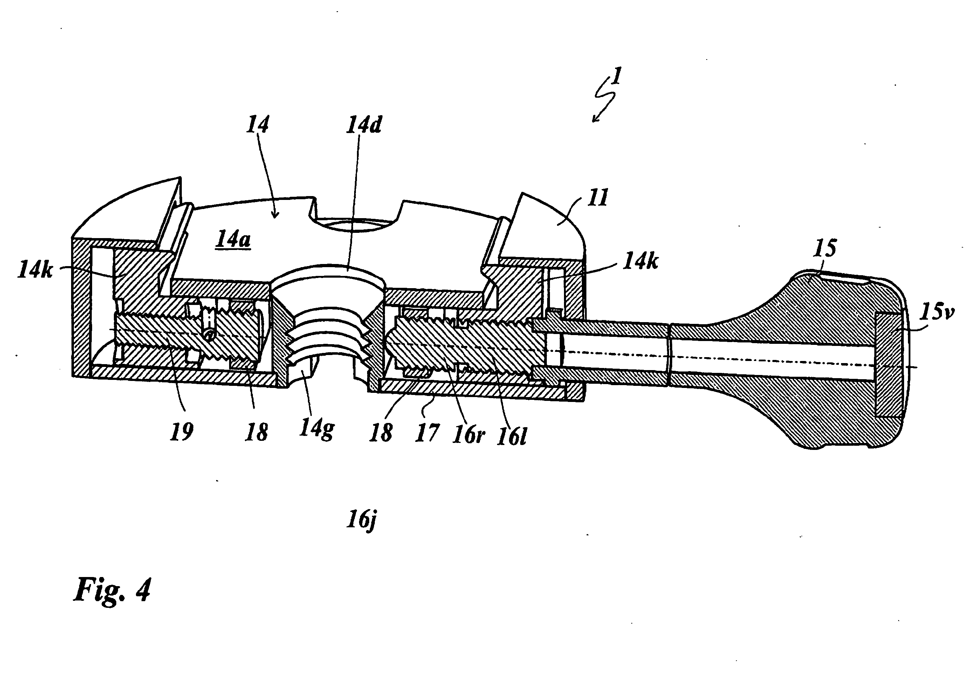

Die Klemmplatte 14a weist ein Durchgangsloch 14d auf, in das eine Gewindehülse 14g eingesetzt ist (siehe Fig. 4), die eine Verliersicherung für die Stativschraube 12 bildet. Die Stativschraube 12 (siehe Fig. 1) weist im unteren Endabschnitt ein Stativgewinde und dahinter einen Durchmesser auf, der kleiner als der Kerndurchmesser des Stativgewindes ist. Die Gewindehülse kann einstückig mit der Klemmplatte 14 oder der Bodenplatte 17 ausgebildet sein.

Der Drehgriff 15 ist drehstarr mit einer Gewindespindel 16 verbunden. Der dem Drehgriff 15 zugewandte Endabschnitt der Gewindespindel 16 ist als ein Formansatz ausgebildet, der zur drehfesten Verbindung mit einer in dem Drehgriff 15 ausgebildeten Formausnehmung formschlüssig gepaart ist. Der Drehgriff 15 ist mittels einer Befestigungsschraube 15s, die in ein Gewindeloch der Gewindespindel 16 eingreift, gegen Abziehen gesichert. Eine Verschlussplatte 15v ist nach der Montage in eine stirnseitige Ausnehmung des Drehgriffs 15 eingesetzt.

Die Gewindespindel 16 weist zwei Gewindeabschnitte mit gleicher Steigung auf, zwischen denen ein gewindeloser Mittenabschnitt angeordnet ist. In dem in Fig. 2 dargestellten Ausführungsbeispiel weist ein vorderer Gewindeabschnitt 16r, der dem Drehgriff 15 abgewandt ist, ein Rechtsgewinde auf und ein hinterer Gewindeabschnitt 161 ein Linksgewinde auf. Der vordere Gewindeabschnitt 16r ist mit einem Gewindeloch der einen Klemmbacke 14k gepaart, der hintere Gewindeabschnitt 161 ist mit einem Gewindeloch der anderen Klemmbacke 14k gepaart. Die Klemmbacken 14k sind zwischen der Unterseite der Klemmplatte 14 und der Oberseite einer Bodenplatte 17 geführt und gegen Verdrehen um die Drehachse der Gewindespindel 16 gesichert (siehe Fig. 2). Wird nun die Gewindespindel 16 im Uhrzeigersinn gedreht, bewegen sich die beiden Klemmbacken 14k aufeinander zu. Wird die die Gewindespindel 16 entgegen dem Uhrzeigersinn gedreht, bewegen sich die beiden Klemmbacken 14k voneinander weg.

Zur Fixierung der Gewindespindel 16 in axialer Richtung und zur Justierung der Nullpunktslage der Klemmbacken 14k in Bezug auf die Mittelachse der Schnellspannvorrichtung 1 sind zwei voneinander beabstandete ringförmige Justiermuttern 16j vorgesehen. Die Klemmplatte 14a weist an ihrer unteren Stirnfläche eine Erhebung mit zwei voneinander beabstandeten Anschlagskanten auf, gegen welche die Justiermuttern 16j mit Spiel so gezogen werden, dass die Klemmbacken 14k stets den gleichen Abstand zur Mittelachse der Schnellspannvorrichtung 1 aufweisen. Die Justiermuttern 16j weisen radiale Gewindelöcher zum Eindrehen einer oder mehrerer Madenschrauben 16jm zum Festlegen der Justiermuttern 16j auf der Gewindespindel 16 auf. Es können beispielsweise vier am Umfang verteilte Gewindelöcher vorgesehen sein, die vor dem Eindrehen der Madenschrauben 16jm als Eingriffslöcher für einen Stiftschlüssel zum feinfühligen Verstellen der Justiermuttern 16j verwendbar sind.

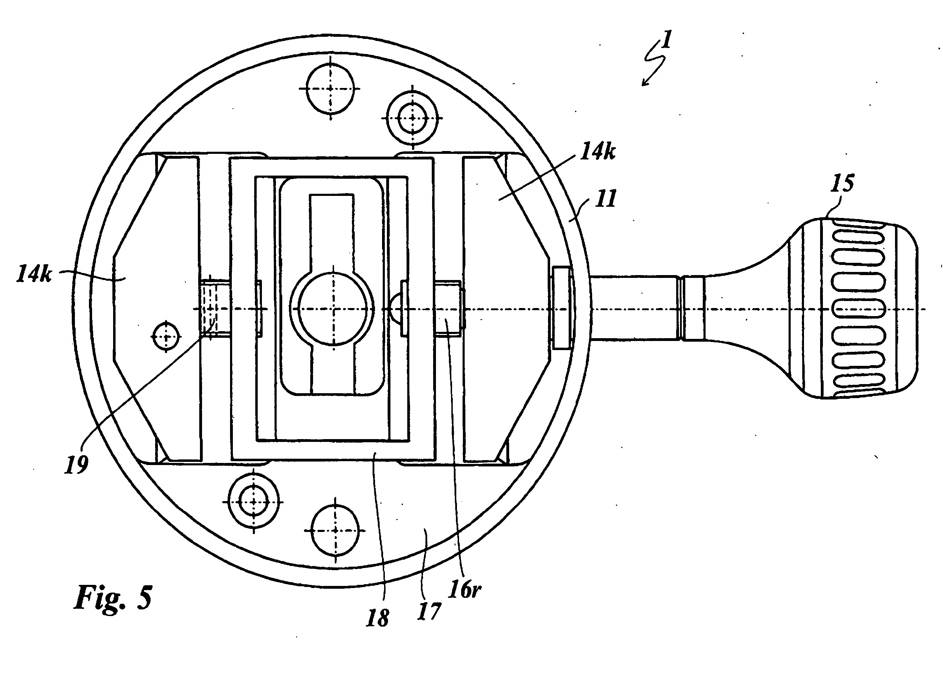

Die Fig. 4 und 5 zeigen ein zweites Ausführungsbeispiel der erfindungsgemäßen Schnellspannvorrichtung, bei dem die Gewindespindel 16 lediglich in eine Klemmbacke 14k eingreift, und zwar mit dem Gewindeabschnitt 161 in die Klemmbacke 14k mit Linksgewinde und mit dem Gewindeabschnitt 16r in einen Rahmenkörper 18 mit Rechtsgewinde. Die Gewindeabschnitte 16l und 16r weisen die gleiche Steigung auf. Der Rahmenkörper 18 ist als ein rechteckiger Rahmen ausgebildet, dessen freier Innenraum durch die Stativschraube 12 durchgreifbar ist.

Zur Lagejustierung der Klemmbacken 14k bezüglich der optischen Achse ist eine Justierschraube 19 vorgesehen, die mit einem ersten Gewindeabschnitt in ein Gewindeloch des Rahmenkörpers 18 eingreift, das dem von der Gewindespindel 16 durchgriffenen Gewindeloch gegenüber angeordnet ist. Die Justierschraube 19 weist einen zweiten Gewindeabschnitt auf, mit dem sie in das Gewindeloch der Klemmbacke 14k eingreift, die nicht von der Gewindespindel 16 durchgriffen ist. Zur feinfühligeren Einstellung kann der zweite Gewindeabschnitt der Justierschraube 19 eine geringere Steigung als der erste Gewindeabschnitt aufweisen. Durch Drehen am Drehgriff 15 wird die Gewindespindel 16 gedreht und dabei ein entsprechender Bewegungsverlauf der Klemmbacken 14 k erhalten, wie vorangehend für das Ausführungsbeispiel der Fig. 1 bis 3 erläutert ist.

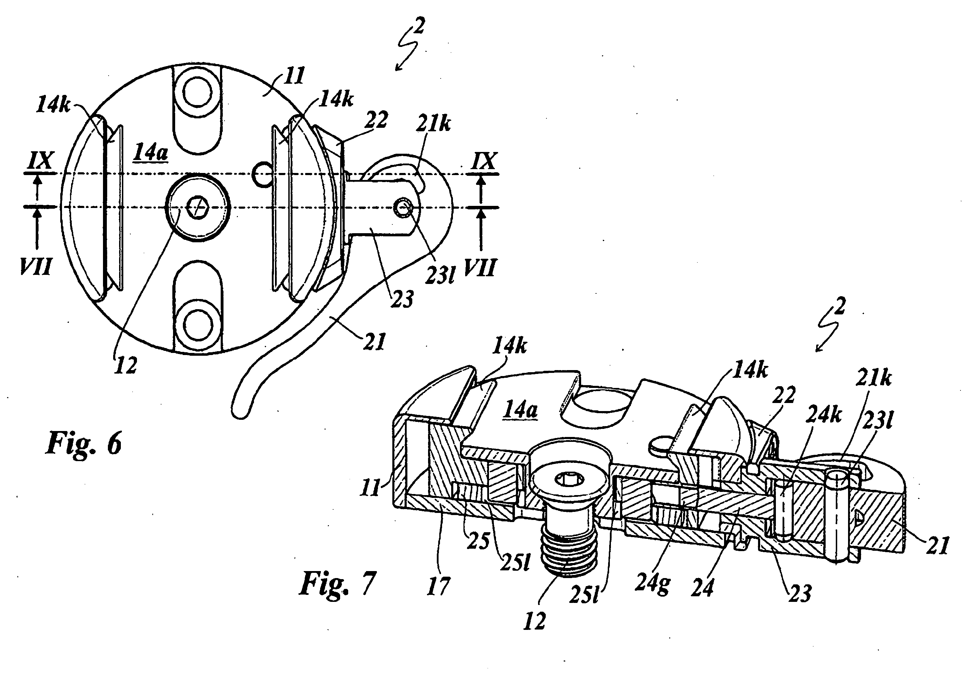

Die Figuren 6 bis 10d zeigen ein weiteres Ausführungsbeispiel der Schnellspannvorrichtung. Sie ist in den Figuren als Schnellspannvorrichtung 2 bezeichnet.

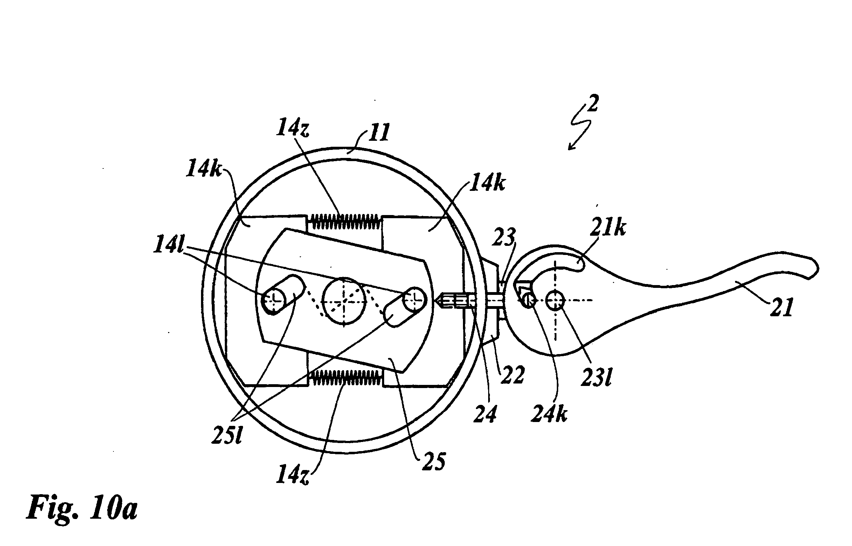

Die Klemmbacken 14k sind in diesem Ausführungsbeispiel durch ein als zweiarmiger Hebel ausgebildetes Koppelglied 25 verbunden, das unter den Klemmbacken 14k angeordnet ist. Das Koppelglied 25 weist ein zentrales Drehlager auf, dessen Lagerzapfen durch die weiter oben genannte Stativschraube 12 gebildet ist und weist zwei mit gleichem Abstand zum Drehlager angeordnete Langlöcher 25l auf. Die Langlöcher 25l bilden, wie in Fig. 10a durch eine unterbrochene Strichlinie verdeutlicht, Führungsabschnitte eines Z-förmigen Hebels, in denen jeweils ein die Klemmbacke14k durchgreifender Lagerstift 141 gleitet. Zwischen den beiden Klemmbacken 14k sind zwei Zugfedern 14z angeordnet, die die Klemmbacken 14k miteinander verspannen.

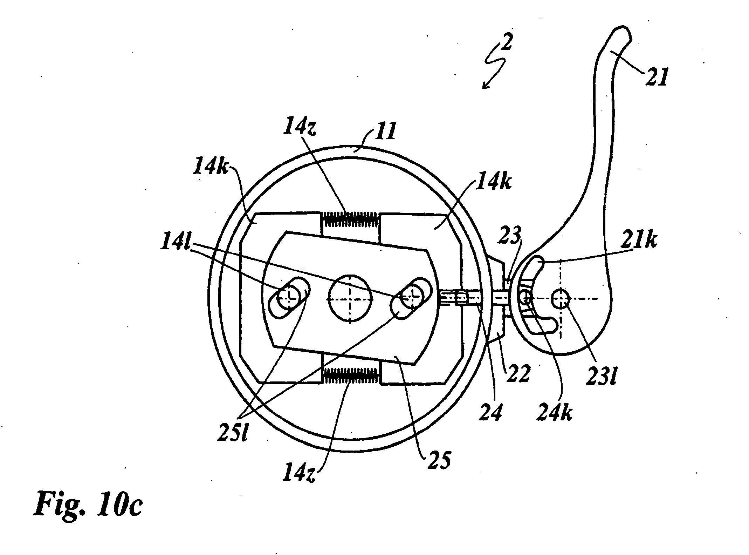

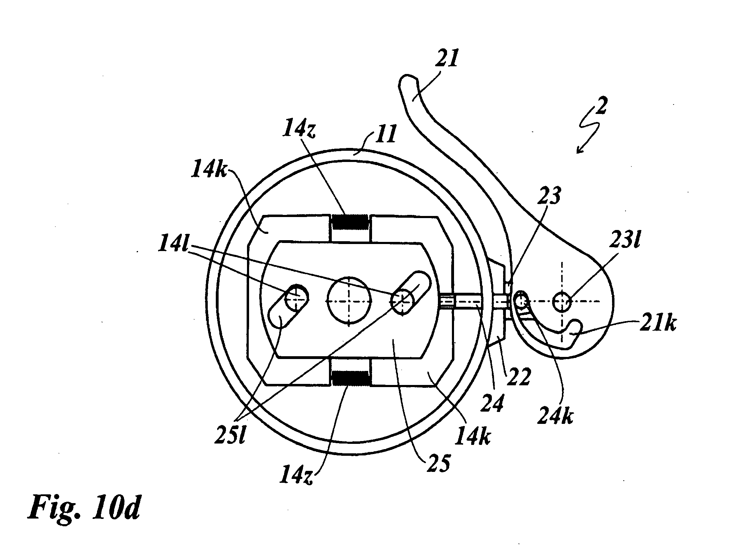

Wenn der Abstand zwischen den beiden Klemmbacken 14k am geringsten ist, sind die Langlöcher 25l in dem dargestellten Fall unter einem Winkel von 45° zur Verschieberichtung der Klemmbacken geneigt (sh. Fig. 10d). Wird nun eine der Klemmbacken 14k von der anderen Klemmbacke fort bewegt, gleitet der Lagerstift 141 in dem Langloch 25l und verschwenkt dabei das Koppelglied 25. Dadurch gleitet der Lagerstift 141 der anderen Klemmbacke 14k in dem anderen Langloch 25l und verschiebt die andere Klemmbacke 14k um den gleichen Betrag, jedoch mit umgekehrtem Vorzeichen (siehe Fig. 10d und Fig. 10c).

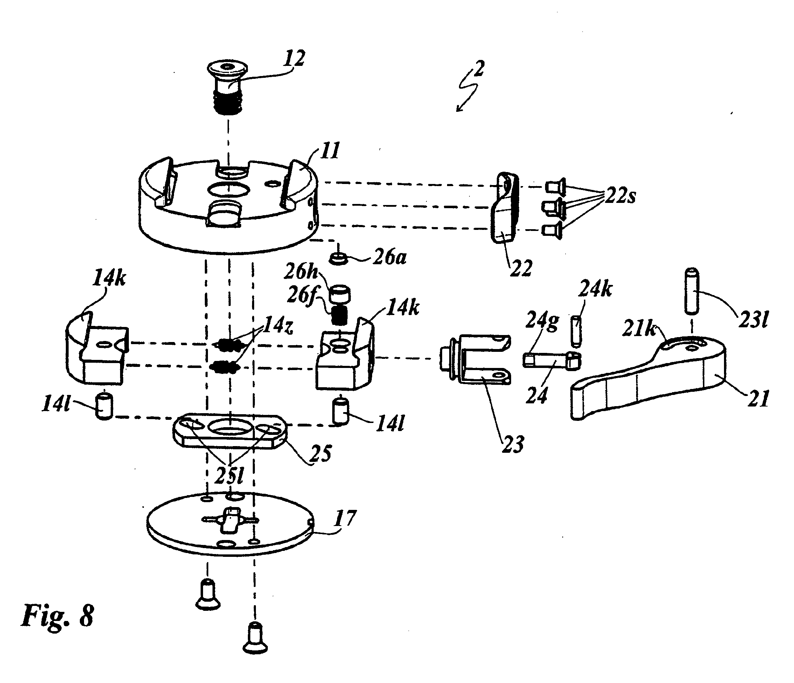

Zum Antrieb der Klemmbacken 14k ist ein Übertragungselement 24 vorgesehen, das mit einem Exzenterhebel 21 zusammenwirkt (Fig. 7 und 8). Der Exzenterhebel 21 ist in einer U-förmigen Gabel 23 mittels eines die U-Schenkel und den Exzenterhebel 21 durchgreifenden Lagerstifts 23l schwenkbar gelagert angeordnet.

Die Gabel 23 weist einen hohlzylinderförmigen Endabschnitt auf, der in einen seitlichen Befestigungsansatz 22 am Gehäuse 11 eingreift, wodurch die Gabel 23 um ihre Längsachse drehbar gelagert ist. Der Befestigungsansatz 22 ist mittels Befestigungsschrauben 22s seitlich an dem Gehäuse 11 der Schnellspannvorrichtung 2 befestigt.

Wie in Fig. 7 und 8 zu erkennen, weist der Exzenterhebel 21 einen Kulissenschlitz 21 k auf, in den ein mit dem Übertragungselement 24 starr verbundener Kulissenstift 24k eingreift. Die Ausbildung und Funktion des Kulissenschlitzes 21k wird weiter unten in den Fig. 10a bis 10d beschrieben.

Das Übertragungselement 24 ist im Wesentlichen zylinderförmig ausgebildet und weist einen abgeflachten Kopfabschnitt auf, der von dem Kulissenstift 24k durchgriffen ist. Der Kulissenstift 24k ist radial von der Längsachse des Übertragungselements 24 erstreckt. Das Übertragungselement 24 durchgreift axial die Gabel 23 und den Befestigungsansatz 22. Der Fußabschnitt des Übertragungselements 24 ist als ein Gewindeabschnitt 24g ausgebildet, der in ein Gewindeloch der dem Exzenterhebel 21 benachbarten Klemmbacke 14k eingreift. Der abgeflachte Kopfabschnitt des Übertragungselements 24 ist in einer schlitzförmigen Ausnehmung des Exzenterhebels 21 geführt. Das Übertragungselement 24 ist so zwar in Bezug auf den Exzenterhebel 21 um die Längsachse des Führungsstifts 24k schwenkbar, nicht jedoch um seine Längsachse. Damit ist das Übertragungselement 24 jedoch mittels des Exzenterhebels 21 um seine Längsachse drehbar, wodurch es mehr oder weniger weit in die dem Exzenterhebel 21 benachbarte Klemmbacke 14k einschraubbar ist. Dadurch ist eine Anpassung der Schnellspannvorrichtung 2 an unterschiedlich breite Halterungsplatten 13 möglich.

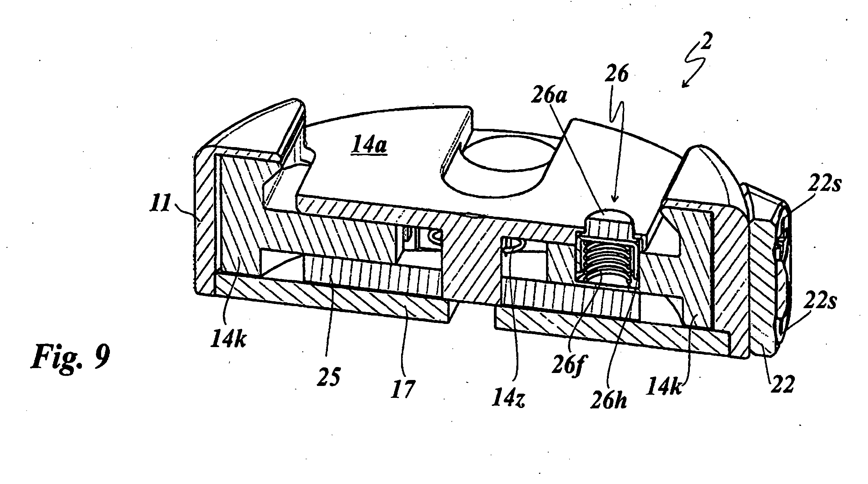

Zur Fixierung der beiden Klemmbacken 14k in einer Offenstellung, in der das Einsetzen der weiter oben beschriebenen Halterungsplatte 13 (siehe Fig. 1 a und 1b) vorgesehen ist, ist ein Schaltgesperre 26 vorgesehen. Das Schaltgesperre 26 umfasst einen federbelasteten Auslöseknopf 26a, der ein abgestuftes Durchgangsloch in der Klemmplatte 14a durchgreift und als Sperrglied wirkt. Wenn der Auslöseknopf 26a eingedrückt wird, gelangt er in den zurückspringenden Bereich des Durchgangslochs, so dass die Klemmbacken 14k durch die Kraft der Zugfedern 14z aufeinander zu bewegt werden, bis sie an der Halterungsplatte 13 zur Anlage kommen. Unter dem Auslöseknopf 26a ist eine in einer Federhülse 26h angeordnete Druckfeder 26f angeordnet, die an der Klemmbacke 14k abgestützt ist (siehe Fig. 9).

Die Fig. 10a bis 10d zeigen nun den Funktionsablauf der Schnellspannvorrichtung 2. Die Schnellspannvorrichtung ist mit abgenommener Bodenplatte 17 von unten dargestellt.

Der Kulissenschlitz 21k im Exzenterhebel 21 weist von unten gesehen drei im Uhrzeigersinn hintereinander angeordnet Kulissenabschnitte auf, die zur Wirkung kommen, wenn der Exzenterhebel 21 bei gleicher Betrachtungsrichtung entgegen dem Uhrzeigersinn verschwenkt wird.

Der erste Kulissenabschnitt ist ein ansteigender Geradenabschnitt, dessen Anfangspunkt näher an der Drehachse des Exzenterhebels 21 liegt als dessen Endpunkt. Der zweite Kulissenabschnitt ist ein Kurvenabschnitt mit konstantem Radius, das heißt ein Kreisabschnitt, durch dessen Mittelpunkt die Drehachse des Exzenterhebels 21 läuft. Der dritte Kulissenabschnitt ist ein ansteigender Kurvenabschnitt, dessen Radius mit zunehmendem Drehwinkel zunimmt.

In Fig. 10a ist die Schnellspannvorrichtung 2 in der Offenstellung. Das zuvor beschriebene Schaltgesperre 26, das durch die Klemmbacke 14k verdeckt ist, fixiert die Klemmbacken 14k entgegen der Zugkraft der maximal gespannten Zugfedern 14z. Der Kulissenstift 24k befindet sich am Anfang des ersten Abschnitts des Kulissenschlitzes 21k, wobei der Exzenterhebel 21 um etwa 90° von dem Gehäuse 11 der Schnellspannvorrichtung 2 abgewinkelt ist.

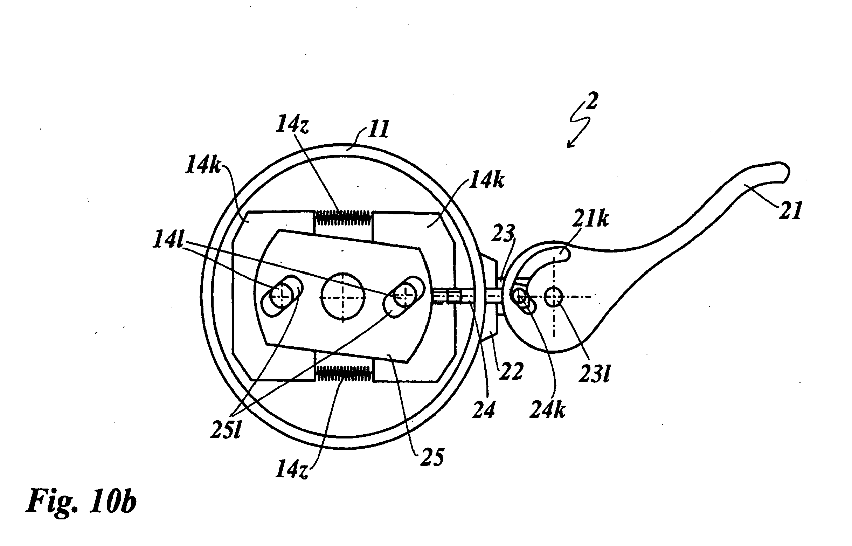

In Fig. 10b ist das Schaltgesperre gelöst und die Zugfedern 14z haben die Klemmbacken 14k aufeinander zu bewegt, wobei der über das Übertragungselement 24 mit der exzenterseitigen Klemmbacke verbundene Kulissenstift 24k das Ende des ersten Kulissenabschnitts erreicht hat und dabei den Exzenterhebel 21 verschwenkt hat.

In Fig. 10c ist der Kulissenstift 24k durch weiteres Schwenken des Exzenterhebels 21 am Ende des zweiten Kulissenabschnitts angelangt, in dem der Exzenterhebel 21 keine Klemmwirkung ausübt. Die Klemmkraft der Klemmbacken 14k wird lediglich durch die Kraft der beiden Zugfedern 14z bestimmt.

In Fig. 10d befinden sich die Klemmbacken 14k in der maximalen Schließstellung und der Kulissenstift 24k ist am Ende des dritten Kulissenabschnitts angelangt. Der Exzenterhebel 21 nimmt nun eine tangentiale Lage zum Gehäuse 11 der Schnellspannvorrichtung 2 ein.

Zum Lösen der Klemmung wird der Exzenterhebel 21 soweit zurückgeschwenkt, dass der Kulissenstift 24k in den zweiten Kulissenabschnitt eingreift. Zur Entnahme der Halterungsplatte 13 wird der Exzenterhebel 21 weiter in die in Fig. 10a dargestellte Stellung verschwenkt, wobei der Auslöseknopf 26a des Schaltgesperres 26 wieder aus der Oberseite der Klemmplatte 14 hervortritt und dabei in dem Durchgangsloch der Klemmplatte 14 einrastet.

Wie bereits weiter oben beschrieben, kann der Klemmbereich des Exzenterhebels 21 in gewissen Grenzen dadurch variiert werden, dass das Übertragungselement 24 mit Hilfe des Exzenterhebels 21 wehr oder weniger weit in die exzenterseitige Klemmbacke 14k eingeschraubt wird. Das kann vorzugsweise in der in Fig. 10c dargestellten Stellung des Exzenterhebels geschehen, in der der Kulissenstift 24k zwischen dem zweiten und dem dritten Kulissenabschnitt angeordnet ist.

### Bezugszeichenliste

- 1,2: Schnellspannvorrichtung
- 11: Gehäuse
- 12: Stativschraube
- 13: Halterungsplatte
- 14: Klemmplatteneinrichtung
- 14a: Klemmplatte
- 14d: Durchgangsloch
- 14g: Gewindehülse
- 14k: Klemmbacke
- 14l: Lagerstift
- 14z: Zugfeder
- 15: Drehgriff
- 15v: Verschlussplatte
- 15s: Befestigungsschraube
- 16: Gewindespindel
- 16j: Justiermuttern
- 16jm: Madenschraube
- 161: Gewindeabschnitt mit Linksgewinde
- 16r: Gewindeabschnitt mit Rechtsgewinde
- 17: Bodenplatte
- 18: Rahmenkörper
- 19: Justierschraube
- 21: Exzenterhebel
- 21k: Kulissenschlitz
- 22: Befestigungsansatz
- 22s: Befestigungsschraube
- 23: Gabel
- 23l: Lagerstift
- 24: Übertragungselement
- 24k: Kulissenstift
- 24g: Gewindeabschnitt
- 25: Koppelglied
- 25l: Langloch
- 26: Schaltgesperre
- 26a: Auslöseknopf
- 26f: Sperrfeder
- 26h: Federhülse
- 26f: Druckfeder

## Patentansprüche

1. Schnellspannvorrichtung (1) für ein fototechnisches oder filmtechnisches Gerät mit einer Klemmplatteneinrichtung (14) mit einer daran feststellbaren Halterungsplatte (13) für das Gerät,
wobei die Klemmplatteneinrichtung (14) eine prismenförmige Kulissenführung mit als Klemmbacken (14k) ausgebildeten seitlichen Wänden aufweist,
wobei die Klemmplatteneinrichtung (14) eine Klemmplatte (14a) und eine Bodenplatte (17) aufweist und die Klemmbacken (14k) zwischen der Unterseite der Klemmplatte (14) und der Oberseite der Bodenplatte (17) geführt sind,
wobei die Klemmbacke (14k) mit einem Getriebe derart bewegungsverbunden sind, dass die Klemmbacken (14k) simultan gegensinnig bewegbar sind,
wobei die Klemmbacken (14k) zu einem Referenzpunkt gleichen Abstand aufweisen,
**dadurch gekennzeichnet,**
**dass** die Klemmbacken (14k) mit einem Schraubgetriebe bewegungsverbunden sind, das als Antriebselement eine Gewindespindel (16) mit einem ersten Gewindeabschnitt (16r) mit einem Rechtsgewinde und mit einem zweiten Gewindeabschnitt (16l) mit einem Linksgewinde aufweist,
wobei beide Gewindeabschnitte (16r, 16l) die gleiche Steigung aufweisen, so dass die Klemmbacken (14k) durch Drehen der Gewindespindel (16) simultan gegensinnig bewegbar sind.

2. Schnellspannvorrichtung nach Anspruch 1,
**dadurch gekennzeichnet,**
**dass** die Gewindespindel (16) mit ihrem ersten Gewindeabschnitt (16r) mit einem in der ersten Klemmbacke (14k) ausgebildeten Gewindeloch mit Rechtsgewinde und mit ihrem zweiten Gewindeabschnitt (16l) mit einem in der zweiten Klemmbacke (14k) ausgebildeten Gewindeloch mit Linksgewinde zusammenwirkt.

3. Schnellspannvorrichtung (1) für ein fototechnisches oder filmtechnisches Gerät mit einer Klemmplatteneinrichtung (14) mit einer daran feststellbaren Halterungsplatte (13) für das Gerät,
wobei die Klemmplatteneinrichtung (14) eine prismenförmige Kulissenführung mit als Klemmbacken (14k) ausgebildeten seitlichen Wänden aufweist,
wobei die Klemmbacken (14k) mit einem Getriebe derart bewegungsverbunden sind, dass die Klemmbacken (14k) simultan gegensinnig bewegbar sind,
wobei die Klemmbacken (14k) zu einem Referenzpunkt gleichen Abstand aufweisen,
**dadurch gekennzeichnet,**
**dass** eine Gewindespindel (16) mit ihrem ersten Gewindeabschnitt (16r) mit einem in einer ersten Klemmbacke (14k) ausgebildeten Gewindeloch mit Rechtsgewinde und mit ihrem zweiten Gewindeabschnitt (16l) mit einem in einem Rahmenkörper (18) ausgebildeten Gewindeloch mit Linksgewinde zusammenwirkt oder umgekehrt, und dass der Rahmenkörper (18) mit einer zweiten Klemmbacke (14k) bewegungsverbunden ist.

4. Schnellspannvorrichtung nach einem der vorangegangenen Ansprüche,
**dadurch gekennzeichnet,**
**dass** die Gewindeabschnitte (16r, 16l) als zweigängige Gewinde ausgebildet sind.

5. Schnellspannvorrichtung nach einem der vorangehenden Ansprüche,
**dadurch gekennzeichnet,**
**dass** die Gewindespindel (16) über einen am freien Ende angeordneten Drehgriff (15) drehbar betätigbar ist.

6. Schnellspannvorrichtung nach einem der vorangehenden Ansprüche,
**dadurch gekennzeichnet,**
**dass** die Klemmbacken (14k) zwischen der Unterseite der Klemmplatteneinrichtung (14) und der Oberseite einer Bodenplatte (17) geführt und gegen Verdrehen um die Drehachse der Gewindespindel (16) gesichert sind.

7. Schnellspannvorrichtung nach einem der vorangehenden Ansprüche,
**dadurch gekennzeichnet,**
**dass** zwischen den Klemmbacken (14k) auf dem ersten Gewindeabschnitt (16r) und auf dem zweiten Gewindeabschnitt (161) eine Justiermutter (16j) angeordnet ist, wobei zwischen den Justiermuttern (16j) ein aus der Unterseite der Klemmplatteneinrichtung (14) hervorstehendes Anschlagelement angeordnet ist, an dem die Justiermuttern (16j) mit Spiel anliegen.

8. Schnellspannvorrichtung nach einem der Ansprüche 3 bis 7,
**dadurch gekennzeichnet,**
**dass** der Rahmenkörper (18) über eine Justierschraube (19) mit der zweiten Klemmbacke (14k) bewegungsverbunden ist.

9. Schnellspannvorrichtung (2) für ein fototechnisches oder filmtechnisches Gerät mit einer Klemmplatteneinrichtung (14) mit einer daran feststellbaren Halterungsplatte (13) für das Gerät,
wobei die Klemmplatteneinrichtung (14) eine prismenförmige Kulissenführung mit als Klemmbacken (14k) ausgebildeten seitlichen Wänden aufweist, wobei die Klemmbacken (14k) simultan gegensinnig bewegbar sind und wobei die Klemmbacken (14k) zu einem Referenzpunkt gleichen Abstand aufweisen,
wobei vorgesehen ist,
dass die Klemmbacken (14k) durch ein Koppelglied (25) verbunden sind,
dass das Koppelglied (25) ein zentrales Drehlager und an gegenüberliegenden Abschnitten Führungseinrichtungen (25l) für die Klemmbacken (14k) aufweist,
dass das Koppelglied (25) als Drehscheibe und/oder zweiarmiger Hebel ausgebildet ist, und **dadurch gekennzeichnet, dass** an einer der Klemmbacken (14k) ein Übertragungselement (24) angreift, das mit einem Exzenterhebel (21) zusammenwirkt.

10. Schnellspannvorrichtung nach Anspruch 9,
**dadurch gekennzeichnet,**
**dass** die Führungsabschnitte als Langlöcher (25l) ausgebildet sind, in die mit den Klemmbacken (14k) verbundene Mitnehmer eingreifen.

11. Schnellspannvorrichtung nach Anspruch 10,
**dadurch gekennzeichnet,**
**dass** die Langlöcher (25l) Führungsabschnitte eines Z-förmigen Hebels bilden, und dass in den Führungsabschnitten jeweils ein die Klemmbacke (14k) durchgreifender Lagerstift (14l) angeordnet ist.

12. Schnellspannvorrichtung nach einem der Ansprüche 9 bis 11,
**dadurch gekennzeichnet,**
**dass** zwischen den beiden Klemmbacken (14k) eine Federeinrichtung (14z) angeordnet ist, die die Klemmbacken (14k) miteinander verspannt.

13. Schnellspannvorrichtung nach einem der Ansprüche 9 bis 12,
**dadurch gekennzeichnet,**
**dass** das Übertragungselement (24) einen Gewindeabschnitt (24g) aufweist, der in ein Gewindeloch der einen der Klemmbacken (14k) eingreift.

14. Schnellspannvorrichtung nach einem der Ansprüche 9 bis 13,
**dadurch gekennzeichnet,**
**dass** der Exzenterhebel (21) einen Kulissenschlitz (21 k) aufweist, in den ein mit dem Übertragungselement (24) starr verbundener Kulissenstift (24k) eingreift.

15. Schnellspannvorrichtung nach einem der Ansprüche 9 bis 14,
**dadurch gekennzeichnet,**
**dass** der Exzenterhebel (21) in einer U-förmigen Gabel (23) gelagert ist, die von dem Übertragungselement (24) durchgriffen ist und an dem Gehäuse (11) drehbar gelagert angeordnet ist.

## Claims

1. Quick-clamping device (1) for a photo-technical or film-technical device having a clamping plate device (14) having a mounting plate (13) for the device which is able to be fixed thereon,
wherein the clamping plate device (14) has a prism-shaped sliding block guide having lateral walls formed as clamping jaws (14k),
wherein the clamping plate device (14) has a clamping plate (14a) and a base plate (17) and the clamping jaws (14k) are guided between the lower side of the clamping plate (14) and the upper side of the base plate (17),
wherein the clamping jaws (14k) are moveably connected to a gear in such a way that the clamping jaws (14k) are able to movein contrary directions simultaneously,
wherein the clamping jaws (14k) are at the same distance from a reference point,
**characterised in that**,
the clamping jaws (14k) are moveably connected to a worm gear which has a threaded spindle (16) as a drive element, having a first threaded section (16r) having a right-hand thread and having a second threaded section (161) having a left-hand thread, wherein both threaded sections (16r, 161) have the same gradient, such that the clamping jaws (14k) are able to move in contrary directions simultaneously by rotating the threaded spindle (16).

2. Quick-clamping device according to claim 1, **characterised in that**,
the threaded spindle (16) interacts with a threaded hole formed in the first clamping jaw (14k), having the right-hand thread, with its first threaded section (16r) and with a threaded hole formed in the second clamping jaw (14k), having the left-hand thread, with its second threaded section (161).

3. Quick-clamping device (1) for a photo-technical or film-technical device having a clamping plate device (14) having a mounting plate (13) for the device which is able to be fixed thereon,
wherein the clamping plate device (14) has a prism-shaped sliding block guide having lateral walls formed as clamping jaws (14k),
wherein the clamping jaws (14k) are moveably connected to a gear in such a way that the clamping jaws (14k) are able to be moved in contrary directions simultaneously,
wherein the clamping jaws (14k) are at the same distance from a reference point,
**characterised in that**,
a threaded spindle (16) interacts with a threaded hole formed in a first clamping jaw (14k), having the right-hand thread, with its first threaded section (16r) and with a threaded hole formed in a frame body (18), having the left-hand thread, with its second threaded section (161) or vice versa, and the frame body (18) is moveably connected to a second clamping jaw (14k).

4. Quick-clamping device according to one of the preceding claims,
characterisedin that,
the threaded sections (16r, 161) are formed as double threads.

5. Quick-clamping device according to one of the preceding claims,
**characterised in that**,
the threaded spindle (16) is able to be operated to be able to rotate via a turning handle (15) arranged on the free end.

6. Quick-clamping device according to one of the preceding claims,
**characterised in that**,
the clamping jaws (14k) are guided between the lower side of the clamping plate device (14) and the upper side of a base plate (17) and are secured from rotation around the axis of rotation of the threaded spindle (16).

7. Quick-clamping device according to one of the preceding claims,
**characterised in that**,
an adjusting nut (16j) is arranged between the clamping jaws (14k) on the first threaded section (16r) and on the second threaded section (161), wherein a stop element protruding from the lower side of the clamping plate device (14) is arranged between the adjusting nuts (16j), on which stop element the adjusting nuts (16j) abut with clearance.

8. Quick-clamping device according to one of claims 3 to 7,
**characterised in that**,
the frame body (18) is moveably connected to the second clamping jaw (14k) via an adjusting screw (19) .

9. Quick-clamping device (2) for a photo-technical or film-technical device having a clamping plate device (14) having a mounting plate (13) for the device which is able to be fixed thereon,
wherein the clamping plate device (14) has a prism-shaped sliding block guide having lateral walls formed as clamping jaws (14k), wherein the clamping jaws (14k) are able to move in contrary directions simultaneously and wherein the clamping jaws (14k) are at the same distance from a reference point, wherein it is provided
that the clamping jaws (14k) are connected by a coupling element (25),
that the coupling element (25) has a central rotational bearing and guide mechanisms (251) for the clamping jaws (14k) on opposing sections,
that the coupling element (25) is formed as a turntable and/or a two-armed lever, and **characterised in that**,
a transfer element (24) engages with one of the clamping jaws (14k) which interacts with an eccentric lever (21).

10. Quick-clamping device according to claim 9, **characterised in that**,
the guide sections are formed as elongated holes (251) with which carriers that are connected to the clamping jaws (14k) engage.

11. Quick-clamping device according to claim 10, **characterised in that**
the elongated holes (251) form guide sections of a Z-shaped lever, and a bearing pin (141) which reaches through the clamping jaws (14k)is arranged in the respective guide sections.

12. Quick-clamping device according to one of claims 9 to 11,
**characterised in that**,
a spring device (14z) is arranged between the two clamping jaws (14k) which brace the clamping jaws (14k) to each other.

13. Quick-clamping device according to one of claims 9 to 12,
**characterised in that**,
the transfer element (24) has a threaded section (24g) which engages with a threaded hole of one of the clamping jaws (14k).

14. Quick-clamping device according to one of claims 9 to 13,
**characterised in that**,
the eccentric lever (21) has a sliding block slot (21k) with which a sliding block pin (24k) that is connected rigidly to the transfer element (24) engages.

15. Quick-clamping device according to one of claims 9 to 14,
**characterised in that**,
the eccentric lever (21) is mounted in a U-shaped fork (23) which is reached through by the transfer element (24) and is arranged to be mounted rotatably on the housing (11).

## Revendications

1. Dispositif de serrage rapide (1) pour un appareil photographique ou une caméra avec un dispositif à plaques de blocage (14) avec une plaque de support (13) pouvant être fixée sur celui-ci, pour l'appareil, ce dispositif à plaques de blocage (14) comprenant un guidage coulissant, en forme de prisme, avec des parois latérales conçues comme des mâchoires de blocage (14k),
le dispositif à plaques de blocage (14) comprenant une plaque de blocage (14a) et une plaque de fond (17) et les mâchoires de blocage (14k) étant guidées entre la face inférieure de la plaque de blocage (14) et la face supérieure de la plaque de fond (17),
les mâchoires de blocage (14k) étant reliées en mouvement avec un engrenage, de façon à ce que les mâchoires de blocage (14k) puisse être déplacées simultanément dans des directions opposées,
les mâchoires de blocage (14k) étant à la même distance d'un point de référence, **caractérisé en ce que**
les mâchoires de blocage (14k) sont reliées en mouvement avec une engrenage à vis, qui comprend, en tant qu'élément d'entraînement, une tige filetée (16) avec une première portion filetée (16r) avec un filetage à droite et avec une deuxième portion filetée (16l) avec un filetage à gauche,
les deux portions filetées (16r, 16l) possédant le même pas, de façon à ce que les mâchoires de blocage (14k) puissent être déplacées simultanément dans des directions opposées par la rotation de la tige filetée (16).

2. Dispositif de serrage rapide selon la revendication 1,
**caractérisé en ce que**
la tige filetée (16) interagit, avec sa première portion filetée (16r), avec un trou fileté réalisé dans la première mâchoire de blocage (14k), avec un filetage à droite et, avec sa deuxième portion filetée (16l), avec un trou fileté réalisé dans la deuxième mâchoire de blocage (14k), avec un filetage à gauche.

3. Dispositif de serrage rapide (1) pour un appareil photographique ou une caméra, avec un dispositif à plaques de blocage (14) avec une plaque de support (13) pouvant être fixée sur celui-ci, pour l'appareil, ce dispositif à plaques de blocage (14) comprenant un guidage coulissant, en forme de prisme, avec des parois latérales conçues comme des mâchoires de blocage (14k),
les mâchoires de blocage (14k) étant reliées en mouvement avec un engrenage, de façon à ce que les mâchoires de blocage (14k) puisse être déplacées simultanément dans des directions opposées,
les mâchoires de blocage (14k) étant à la même distance d'un point de référence, **caractérisé en ce que**
une tige filetée (16) interagit, avec sa première portion filetée (16r), avec un trou fileté réalisé dans la première mâchoire de blocage (14k), avec un filetage à droite et, avec sa deuxième portion filetée (16l), avec un trou fileté réalisé dans le châssis (18), avec un filetage à gauche, ou inversement, et **en ce que** le châssis (18) est relié en mouvement avec une deuxième mâchoire de blocage (14k).

4. Dispositif de serrage rapide selon l'une des revendications précédentes, **caractérisé en ce que**
les portions filetées (16r, 16l) sont conçues comme des filetages à doubles filets.

5. Dispositif de serrage rapide selon l'une des revendications précédentes, **caractérisé en ce que**
la tige filetée (16) peut être actionnée en rotation par l'intermédiaire d'une poignée rotative (15) disposée à son extrémité libre.

6. Dispositif de serrage rapide selon l'une des revendications précédentes, **caractérisé en ce que**
les mâchoires de blocage (14k) sont guidées entre la face inférieure du dispositif à plaques de blocage (14) et la face supérieure d'une plaque de fond (17) et sont sécurisées contre une rotation autour de l'axe de rotation de la tige filetée (16).

7. Dispositif de serrage rapide selon l'une des revendications précédentes, **caractérisé en ce que**
entre les mâchoires de blocage (14k) sur la première portion filetée (16r) et sur la deuxième portion filetée (16l), se trouve un écrou de réglage (16j), un élément de butée, sur lequel les écrous de réglage (16j) s'appuient avec un jeu, dépassant de la face inférieure du dispositif à plaques de blocage (14).

8. Dispositif de serrage rapide selon l'une des revendications 3 à 7, **caractérisé en ce que**
le châssis (18) est relié en mouvement avec la deuxième mâchoire de blocage (14k) par l'intermédiaire d'une vis de réglage (19).

9. Dispositif de serrage rapide (2) pour un appareil photographique ou une caméra, avec un dispositif à plaques de blocage (14) avec une plaque de support (13) pouvant être fixée sur celui-ci, pour l'appareil, ce dispositif à plaques de blocage (14) comprenant un guidage coulissant, en forme de prisme, avec des parois latérales conçues comme des mâchoires de blocage (14k), les mâchoires de blocage (14k) pouvant être déplacées simultanément dans des directions opposées et les mâchoires de blocage (14k) étant à la même distance d'un point de référence,
moyennant quoi il est prévu
que les mâchoires de blocage (14k) soient reliées par un organe de couplage (25), que l'organe de couplage (25) comprenne un palier rotatif central et, sur des portions opposées, des dispositifs de guidage (25l) pour les mâchoires de blocage (14k),
que l'organe de couplage (25) soit conçu comme un disque rotatif et/ou un levier à deux bras et **caractérisé en ce que**
sur une des mâchoires de blocage (14k), s'emboîte un élément de transmission (24) qui interagit avec le levier excentrique (21).

10. Dispositif de serrage rapide selon la revendication 9,
**caractérisé en ce que**
les portions de guidage sont conçues comme des trous oblongs (25l) dans lesquels s'emboîtent des taquets d'entraînement reliés aux mâchoires de blocage (14k).

11. Dispositif de serrage rapide selon la revendication 10,
**caractérisé en ce que** les trous oblongs (25l) forment des portions de guidage d'un levier en forme de Z et **en ce que**, dans chacune des portions de guidage, se trouve un tenon (14l) traversant la mâchoire de blocage (14k).

12. Dispositif de serrage rapide selon l'une des revendications 9 à 11, **caractérisé en ce que**
entre les deux mâchoires de blocage (14k), se trouve un dispositif à ressort (14z) qui serre les mâchoires de blocage (14k) entre elles.

13. Dispositif de serrage rapide selon l'une des revendications 9 à 12, **caractérisé en ce que**
l'élément de transmission (24) présente une portion filetée (24g) qui s'emboîte dans un trou fileté de l'une des mâchoires de blocage (14k).

14. Dispositif de serrage rapide selon l'une des revendications 9 à 13, **caractérisé en ce que**
le levier excentrique (21) présente une fente de coulissement (21 k), dans laquelle s'emboîte une goupille de coulissement (24k) reliée de manière rigide à l'élément de transmission (24).

15. Dispositif de serrage rapide selon l'une des revendications 9 à 14, **caractérisé en ce que**
le levier excentrique (21) est logé dans une fourche en forme de U (23), traversée par l'élément de transmission (24) et est logé de manière rotative sur le boîtier (11).
